# EUROPEAN PATENT APPLICATION

(11) **EP 1 965 531 A1**
(43) Date of publication of application: **03.09.2008**
(21) Application number: 07425122.4
(22) Date of filing: 02.03.2007
(51) Int. Cl.: H04L 1/00

(54) **Method and system for the adaptive modulation control of a digital communication system.**

(71) Applicant: SIAE Microelettronica S.p.A., 20093 Cologno M. MI (IT)
(72) Inventor: Marion, Gianni Maria, 20148 Milano (IT); Grimoldi, Massimo, 20138 Milano (IT)
(74) Representative: Gatti, Enrico

(57) **Abstract**

Method for adaptive modulation control of digital communication systems comprising a transmitter and a receiver placed in a first and in a second location, comprising the steps of: determining a first monitoring signal indicative of the received signal level in said second location; down shifting the modulation order in said first location, in the case said first monitoring signal is lower than a prefixed value, and up shifting the modulation order when normal propagation conditions are restored.

## Description

The present invention relates to a method and to a system for the adaptive modulation control of a digital communication system and to a digital communication system using such method.

It refers to point to point digital communication systems, using multilevel modulation and in particular Quadrature Amplitude Modulation (QAM).

In order to improve the link availability performance in digital radio relay systems, an adaptive transmission power control (ATPC) is very often implemented.

The ATPC varies the transmit power level in order to maintain the received signal level (RSL) just above the targeted threshold for the bit-error-rate (BER).

But, when the maximum possible transmit output power is reached and the propagation conditions get worse the link availability could be lost.

Accordingly, there is a need in the art for an improved method for the adaptive modulation control of a digital communication system and for a digital communication system using such method.

An object of the present invention is therefore to provide a method for the adaptive modulation control of a digital communication system and a digital communication system using such method, that is able to maintain the link availability also in poor propagation conditions.

A further object of the present invention is to provide a method and a system able to be implemented in already installed radio relay systems, without need to replace the equipment.

These and further objects are attained according to the present invention by a Method for adaptive modulation control of digital communication systems comprising a transmitter and a receiver placed in a first and in a second location, comprising the steps of: determining a first monitoring signal indicative of the received signal level in said second location; down shifting the modulation order in said first location, in the case said first monitoring signal is lower than a prefixed value.

These objects are also attained by a system for adaptive modulation control of digital communication systems comprising a transmitter and a receiver placed in a first and in a second location, and means for providing a first monitoring signal indicative of the received signal level in said second location; means for down shifting the modulation order in said first location, in the case said first monitoring signal indicative of the received signal level is lower than a prefixed value.

Thanks to the present invention it is possible to improve the link availability performance reducing the modulation order in adverse propagation conditions.

With down shifting the modulation order it is meant that the modulation constellation shifts from a higher order to a lower order, for example from 32 QAM to 16 QAM or 4 QAM. And vice versa, with up shifting the modulation order it is meant that the modulation constellation shifts from a lower order to a higher order, for example from 4 QAM to 16 QAM or 32 QAM.

The constellation in use can be changed, down shifting for instance from 32 QAM. to either 16 or 4 QAM, or otherwise from 16 to 4 QAM, improving (just in arithmetical terms) the working range of roughly 3 dB, 9.5 dB and 6.5 dB of power respectively, while maintaining identical performance for the portion of traffic which continues being transferred.

In this way the amount of throughput over the link becomes lower, but the remaining transmission capacity achieves a better noise resistance.

It is possible to obtain a performance improvement, concerning the number of interruptions of the link, and, also a performance improvement in the error rate experienced by the portion of traffic which continues to be transferred before and after any modulation switch.

A further advantage of the present invention is a simplification of the control mechanism, for dynamically detecting the rise and fall of degraded propagation conditions, based upon the confidence on the bidirectional nature of the perturbations. This simplification is achieved employing, instead of some dedicated ones, the signalling of the transmit power control mechanism, whatever way it has been implemented inside the equipment (ATPC or other equivalent ones), disregarding the fact that this control management is active or not during the system operation.

One of the terminals, and consecutively the other, or even both of them almost contemporarily, starts the modulation shift as soon as the radio link degrades.

More specifically, the link interruption caused by the change of modulation in the remote transmitter can be itself taken as trigger condition for driving the receiving terminal to perform the modulation shift. On this basis it can be useful making the radio terminals change the configuration of all their transmitting and receiving sections at the same time, thus helping to recover more quickly their connectivity while employing the new modulation.

All the modulation changes happen at almost constant power, with the advantage that the lock condition of the devices along the transmission chain is more easily recovered or even all the time preserved.

ATPC signalling, as already written, can be re-used for obtaining link terminal synchronization.

Besides, by accurately setting the comparing thresholds away from the field intensity value, which statistically determines the down-shift of modulation, it is possible to gain some benefit for stabilizing the adaptive modulation process, implementing a programmable hysteresis protection mechanism; which could avoid frequent modulation switches due to fluctuations near a constant value of the received field.

To further improve the stabilization, a waiting interval can be defined to inhibit the recovery process toward the higher modulation to take place before it has completely elapsed.

Furthermore, to improve the process reliability, every time a connection loss is detected longer than a pre-determined one, each equipment autonomously switches according to some rules to a common lower modulation, while resorting to the maximum available transmit power.

The characteristics and advantages of the present invention will be apparent from the ensuing description of a practical embodiment thereof, illustrated by way of nonlimiting example in the accompanying drawings, in which:
Figure 1 is a schematic view of one terminal (location) of a digital communication system according to the invention;
Figures 2 and 3 are two schematic view of diagrams showing the process of shifting down and up the modulation order according to the invention.

Referring to the figures one terminal of a digital communication system according to the invention comprises a transmitter, that only for describing purposes, has been split in two parts, the transmitter 20 for the main channel and the transmitter 21 for the service channel. The information to be transmitted is provided to the input 22 and the signal is transmitted by the antenna 23 and the service channel is transmitted in principle by the antenna 24 (real or virtual).

In the same way the receiver, always only for describing purposes, has been split in two parts, the receiver 25 for the main channel and the receiver 26 for the service channel. The signal of the main channel is received by the antenna 27 and the service channel is received in principle by the antenna 28. The received data are available at the output 29.

In almost all the existing transmitters and receivers some service ports are available for link management and/or service tasks, where information related to transmission system performance and working conditions can be obtained or control signals can be provided.

In particular, at the transmitter side, input port 30, is for selecting the output power level, and the input port 31 for selecting the modulation constellation order (for example 32 QAM, 16 QAM or 4 QAM).

At the receiver side output port 32 is available for extracting a signal indicative of the received power level IP, and output port 33 for exracting a signal indicative of the BER (bit error rate) of the received signal, and/or indicative of the mse (mean squared error) of the received signal, and/or indicative of a combination of two of the above signals.

A controller 34 receives the signal of the output ports 32 and 33 and provides the signals to the input ports 30 and 31.

According to the present invention it is possible to improve the link availability performance reducing the modulation order, for example from 32 QAM to 16 QAM or 4 QAM, when the propagation conditions worsen and then rising the modulation order, when the propagation conditions get better.

Referring now to the process which leads to reducing the number of modulation states, following to a worsening of the propagation conditions: the control method becomes aware of the degraded transmission channel condition from the analysis of information provided by the transmit power control mechanism. Each time the measured value of the received power is lower than a pre-determined threshold, the control mechanism is supposed to exchange some information, through the radio communication channel, aimed to make the far transmitter increase its emitted power.

According to the present invention, a terminal is enabled to reduce the modulation (or in other words, to shift to a lower order of modulation) when:
- a local power increase is urged by the remote terminal, but it is no longer feasible having the local transmitter already reached the maximum output power level; and/or
- the signal indicative of the BER or mse or IP, or a combination of them, is lower than a pre-defined value.

During the modulation shift of the transmitter, the receiver detects a data flow interruption, for instance by combining some of the following indications:
- estimation of the bit error rate or of the signal to noise ratio;
- loss of data sequence alignment of the structured traffic at the receivers;
- internal alarm activation indicating the loss of connection;
- detection of a different modulation in use,
and however by means of the signals available at the output ports 32 and 33.

Therefore, also the receiver shifts to a lower order of modulation.

During the,operation at a reduced modulation order, it is possible to increase the transmitted power by a convenient setting of ATPC control, taking full advantage of the reduced sensitivity to the transmitter non linearity of the low modulation constellation order. (Lower modulation order is more robust against non-linearity of the transmitter power amplifier).

Referring now to the process for restoring the modulation with higher spectral efficiency, when more favourable propagation conditions are present.

It is assumed, as described above, that additional thresholds for controlling the transmit power while working at reduced modulation exist or can be defined, upon crossing of which information is sent over the radio communication channel to vary the emitted power of the remote transmitter, and which can be used to simplify the synchronization between terminals, so that they can perform the modulation shift almost at the same time.

It is then supposed that the power control mechanism requires the remote transmitter to decrease its output power whenever the locally measured received field intensity is greater than a pre-determined threshold.

Therefore, each terminal sends a message requesting the remote one to change modulation, whenever it locally occurs that:
- the transmitter has reached its minimum transmit power, defined within a short distance from the maximum power allowable for the modulation toward which the shift is made, the required precision is assumed to be less than a controlling step;
- enough time has elapsed since a power increase was requested to the remote transmitter;
- no errors were detected during the last few seconds and the estimated bit error rate is better than a pre defined threshold.

After sending such message, the local terminal waits for any of the following events:
- one or more similar messages are repeatedly received from the remote terminal, until reliability of the message itself is proved;
- an interruption is detected, as previously described, within a pre-defined period of time since the last message was sent.

In either case the terminal performs the up shift of modulation. The remote terminal is supposed to behave identically.

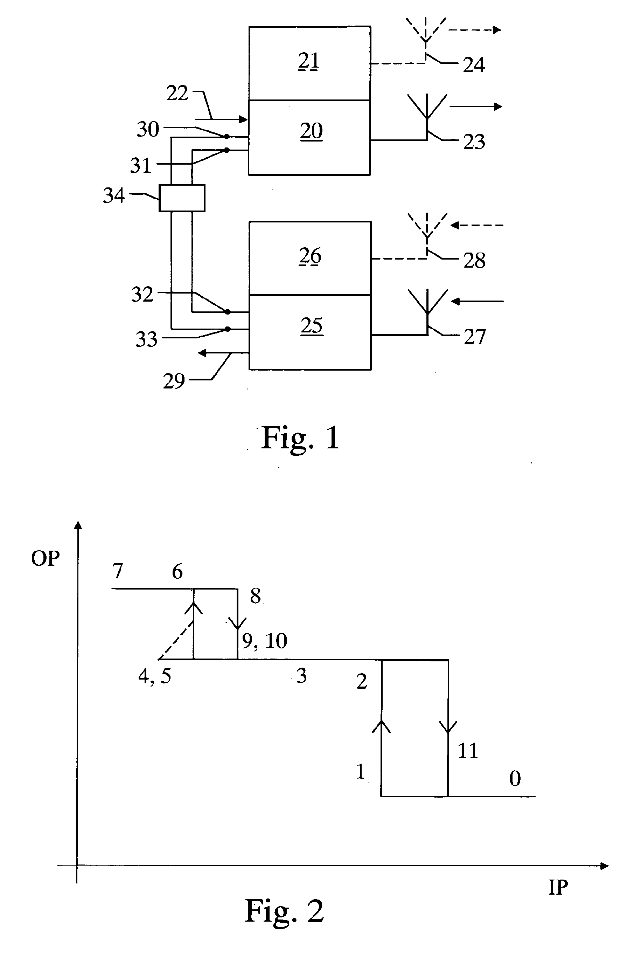

Referring to figure 2, IP is the receiver input power level and OP is the transmit the output power level.

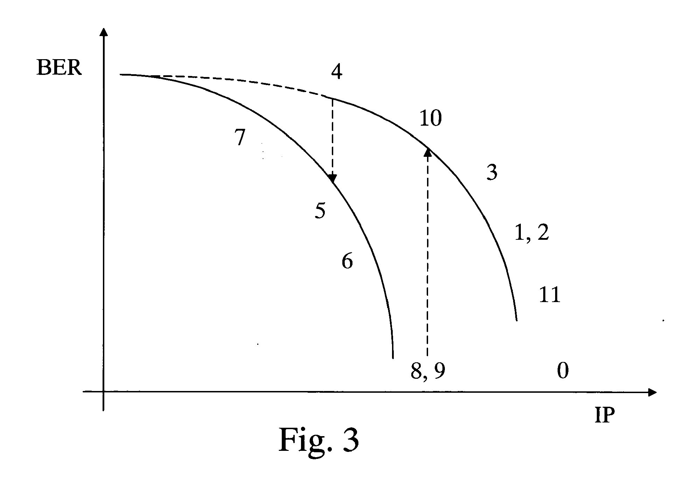

Referring to figure 3, IP, as above, is the receiver input power level and BER is the bit error rate at the receiving end.

Starting from the working point 0, of figure 2 and 3, where the output power is the lowest and the modulation order is the highest, as the transmission channel condition degrades, the received input power IP decreases and both the BER and the OP increase, therefore the working points 1 through 4 are reached in the graph, moving left and upward.

When the maximum transmit output power is reached and/or the BER is worse than a prefixed value (point 4), the modulation is down shifted: the working point 5, is thus reached.

With a lower modulation order it is possible to further increase the output power, reaching point 6.

Working point 7 represents the survival limit: lowest modulation order, maximum path attenuation.

When better transmission channel conditions are restored the modulation order is up shifted (8, 9, 10) and normally, in good channel condition, the output power is decreased down to the working point 11.

For the protected systems, in which transmitting and receiving parts are duplicated, the status information of all the elements along the parallel transmission chains are combined to decide whether modulation changes should be made, using the same criteria as previously described.

To evaluate the working conditions in hot stand-by configurations, the power emitted by the stand-by transmitter is fictitiously considered to be the same as that of the working transmitter.

## Claims

1. Method for adaptive modulation control of digital communication systems comprising a transmitter and a receiver placed in a first and in a second location, comprising the steps of: determining a first monitoring signal indicative of the received signal level in said second location; down shifting the modulation order in said first location, in the case said first monitoring signal is lower than a prefixed value.

2. Method according to claim 1 **characterized by** comprising the phase of sending said first monitoring signal to said first location.

3. Method according to claim 1 **characterized in that** the phase of down shifting the modulation order in said first location comprises the phases of increasing the output power of the transmitter of said first location in response of a control signal; and down shifting the modulation level in said first location, in the case it is not possible to further increase the output power.

4. Method according to claim 3 **characterized by** comprising the phases of determining a second monitoring signal indicative of the received bit error rate in said second location; down shifting the modulation level in said first location, in the case it is not possible to further increase the output power when said second monitoring signal is worse than a prefixed value.

5. Method according to claim 1 **characterized in that** said first monitoring .signal is indicative of an estimation of the received power level in said second location.

6. Method according to claim 4 **characterized in that** said second monitoring signal is indicative of the bit error rate and/or is indicative of the mean squared error in said second location.

7. Method according to claim 1 **characterized in that** when the phase of down shifting the modulation order in said first location is carried out, said second location down shift the modulation order too.

8. Method according to claim 7 **characterized in that** the phase of down shifting the modulation level in said second location comprises the phase of detecting a data flow interruption.

9. Method according to claim 1 **characterized by** comprising the phase of up shifting the modulation order in said first location, in the case said first monitoring signal is higher than a prefixed value.

10. System for adaptive modulation control of digital communication systems comprising a transmitter and a receiver placed in a first and in a second location, and means for providing a first monitoring signal indicative of the received signal level in said second location; means for down shifting the modulation order in said first location, in the case said first monitoring signal indicative of the received signal level is lower than a prefixed value.

11. System according to claim 10 **characterized by** comprising means for up shifting the modulation order in case normal propagation conditions are restored.
